# EUROPEAN PATENT APPLICATION

(11) **EP 4 730 100 A1**
(43) Date of publication of application: **22.04.2026**
(21) Application number: 24896541.0
(22) Date of filing: 26.11.2024
(51) Int. Cl.: G06F 3/14

(54) **DISPLAY METHOD AND ELECTRONIC DEVICE**

(30) Priority: 30.11.2023 CN 202311630745
(71) Applicant: Huawei Technologies Co., Ltd., Shenzhen, Guangdong 518129 (CN)
(72) Inventor: ZHANG, Ming, Shenzhen, Guangdong 518129 (CN); GU, Bing, Shenzhen, Guangdong 518129 (CN)
(74) Representative: Isarpatent
(86) International application number: PCT/CN2024/134680
(87) International publication number: WO 2025/113454

(57) **Abstract**

This application provides a display method and an electronic device. The method is applied to an electronic device. The electronic device includes a first processor, a second processor, an always on display AOD module, and a display. The first processor is a main processor and is configured to run an operating system. The operating system includes a push client and a user interface UI display module. The second processor is configured to serve as a coprocessor or a microprocessor. The method includes: The second processor obtains a first push message that is received by the electronic device in a screen-off state and that is from a server; the second processor parses the first push message, and sends the processed first push message to the AOD module; and the AOD module controls the display to display the processed first push message in a screen-off manner. According to the method, power consumption of displaying a push message by the electronic device can be reduced, and a problem of a large power consumption loss caused by frequently waking up the operating system in a scenario in which the electronic device frequently receives the push message in the screen-off state can be resolved.

## Description

### CROSS-REFERENCE TO RELATED APPLICATIONS

This application claims priority to Chinese Patent Application No. 202311630745.1, filed with the China National Intellectual Property Administration on November 30, 2023 and entitled "DISPLAY METHOD AND ELECTRONIC DEVICE", which is incorporated herein by reference in its entirety.

### TECHNICAL FIELD

This application relates to the field of electronic device technologies, and in particular, to a display method and an electronic device.

### BACKGROUND

A push (push) message (or a push notification) is a message notification displayed by an electronic device to a user. The user may tap the push message to wake up a corresponding application and enter a corresponding application interface. Currently, when receiving the push message in a screen-off state, the electronic device may wake up an operating system of the electronic device. The operating system may control the electronic device to switch to a screen-on state and display the push message, or may control the electronic device to display the push message in a screen-off manner, to implement effect of displaying the push message.

In the foregoing method, if the electronic device frequently receives the push message in the screen-off state, the electronic device frequently wakes up the operating system to perform corresponding processing. Consequently, power consumption is excessively high.

### SUMMARY

This application provides a display method and an electronic device, to reduce power consumption of displaying a push message by the electronic device, and resolve a problem that a large power consumption loss is caused by frequently waking up an operating system when the electronic device frequently receives a push message in a screen-off state.

According to a first aspect, an embodiment of this application provides a display method, applied to an electronic device, where the electronic device includes a first processor, a second processor, an always on display AOD module, and a display. The first processor is a main processor, the first processor is configured to run an operating system, and the operating system includes a push client and a user interface UI display module. The second processor is configured to serve as a coprocessor or a microprocessor. The method includes: The second processor obtains a first push message that is received by the electronic device in a screen-off state and that is from a server; the second processor parses the first push message, and sends the processed first push message to the AOD module; the AOD module controls the display to display the processed first push message in a screen-off manner; or the second processor caches the first push message, and sends the first push message to the push client when determining that the electronic device is switched from the screen-off state to a screen-on state; the push client parses the received first push message, and sends the processed first push message to the UI display module; and the UI display module controls the display to display the processed first push message.

In the method, the second processor is configured to serve as a coprocessor or a microprocessor, and is a processor with low power consumption. In the first method, the second processor with low power consumption parses the push message received by the electronic device in the screen-off state, and sends the processed push message to the AOD module for display, so that effect of screen-off display of the received push message can be implemented. On one hand, it can be ensured that the push message is pushed to a user. On the other hand, in the foregoing process, the operating system running on the first processor does not need to participate in processing. Therefore, the operating system does not need to be woken up, and power consumption can be reduced. In the second method, the second processor with low power consumption caches the push message received by the electronic device in the screen-off state, and after the electronic device switches from the screen-off state to the screen-on state, that is, after the operating system of the electronic device switches from a sleep state to an operating state, the push client in the operating system processes and displays the push message cached by the second processor, so that power consumption can be reduced. In a scenario in which the electronic device frequently receives the push message in the screen-off state, processing based on any one of the foregoing methods can avoid a large power consumption loss caused by frequently waking up the operating system to participate in processing while finally displaying the push message. This reduces an overall power consumption loss and improves processing efficiency.

In a possible design, before the second processor obtains the first push message that is received by the electronic device in the screen-off state and that is from the server, the method further includes: sending a connection request to the server via the push client, where the connection request is used to request to establish a connection to the server; receiving a connection response from the server via the push client, where the connection response is used to determine to establish the connection; and establishing the connection to the server via a modem of the electronic device; and sending a heartbeat packet to the server based on a heartbeat period via the modem of the electronic device, and receiving a heartbeat reply packet that corresponds to the heartbeat packet and that is sent by the server; or establishing the connection to the server via the second processor; and sending a heartbeat packet to the server based on a heartbeat period via the second processor, and receiving a heartbeat reply packet that corresponds to the heartbeat packet and that is sent by the server.

In the method, the push client in the electronic device may be configured to trigger establishment of the connection to the server. A specific process of establishing the connection and a process of maintaining the connection by periodically sending and receiving heartbeat packets after the connection is established may be completed by the modem or the second processor with low power consumption. Compared with a conventional method for establishing and maintaining a connection to the server via the push client, the foregoing method can greatly reduce a quantity of times that the operating system to which the push client belongs is woken up, thereby resolving a problem that a power consumption loss is large because the operating system is frequently woken up, and reducing an overall power consumption loss of the electronic device.

In a possible design, sending the heartbeat packet to the server based on the heartbeat period via the second processor includes: sending the heartbeat packet to a communication module of the electronic device based on the heartbeat period via the second processor; and forwarding the heartbeat packet to the server via the communication module of the electronic device.

In the method, the second processor of the electronic device may forward the heartbeat packet to the server via the communication module of the electronic device, to ensure that the heartbeat packet is successfully sent.

In a possible design, after receiving the connection response from the server via the push client, and before establishing the connection to the server via the modem of the electronic device, the method further includes: determining to establish the connection to the server via the modem of the electronic device.

In a possible design, after receiving the connection response from the server via the push client, and before establishing the connection to the server via the second processor, the method further includes: determining to establish the connection to the server via the second processor.

In a possible design, before the second processor parses the first push message, or before the second processor caches the first push message, the method further includes: The second processor determines that the electronic device is in a mode in which a notification is received without turning on a screen. The mode in which a notification is received without turning on a screen is a mode in which screen-on display of the push message is not allowed after the push message is received in the screen-off state.

In the method, in the mode in which a notification is received without turning on a screen, the electronic device processes and displays the push message by using the foregoing first method, so that timely display of the push message can be ensured, and power consumption for displaying the push message can be reduced. The foregoing second method is used to process and display the push message, so that display of the push message can be ensured, and power consumption for displaying the push message can be reduced.

In a possible design, after the AOD module controls the display to display the processed first push message in a screen-off manner, or after the UI display module controls the display to display the processed first push message, the method further includes: The second processor obtains a second push message that is received by the electronic device in the screen-off state and that is from the server; the second processor determines that a current scenario meets a specified condition; the second processor sends the second push message to the push client, and the push client parses the second push message, and sends the processed second push message to the UI display module; or the second processor parses the second push message, and sends the processed second push message to the push client, and the push client sends the processed second push message to the UI display module; and the UI display module controls the display to display the processed second push message.

In the method, when receiving the push message in the screen-off state, the electronic device can wake up, when determining that the current scenario meets the specified condition, the push client in the operating system to display the push message, so that screen-on display of the push message in the specified scenario can be implemented, and the user can view the push message in a timely manner. This can improve user experience. The second processor may directly send the push message to the push client for processing and displaying, or may process the push message and then send the processed push message to the push client for displaying. Therefore, flexibility and practicability are high.

In a possible design, the electronic device further includes a communication module. Before the second processor obtains the first push message that is received by the electronic device in the screen-off state and that is from the server, the method further includes: The communication module receives the first push message from the server, and determines that the electronic device is in the screen-off state. That the second processor obtains the first push message that is received by the electronic device in the screen-off state and that is from the server includes: The second processor receives the first push message sent by the communication module. Optionally, the communication module is a modem or a wireless fidelity Wi-Fi communication component of the electronic device.

In the method, the electronic device may determine, via the communication module, that the electronic device is in the screen-off state, and send the push message received in the screen-off state to the second processor, so that the second processor performs subsequent processing on the push message received by the electronic device in the screen-off state.

In a possible design, before the second processor obtains the first push message that is received by the electronic device in the screen-off state and that is from the server, the method further includes: The second processor determines that the electronic device is in the screen-off state, and the communication module receives the first push message from the server. That the second processor obtains the first push message that is received by the electronic device in the screen-off state and that is from the server includes: The second processor receives the first push message sent by the communication module.

In the method, the electronic device may determine, via the second processor, that the electronic device is in the screen-off state, and perform subsequent processing on the push message received by the electronic device in the screen-off state. Therefore, the operating system does not need to be woken up when the push message is received in the screen-off state.

In the foregoing method, the electronic device may determine, in different manners, that the electronic device is in the screen-off state, so that flexibility and practicability are high.

In a possible design, the first push message includes a plurality of push messages, and a priority of each of the plurality of push messages is lower than or equal to a specified priority.

In a possible design, a quantity of the plurality of push messages is a specified value.

Based on the foregoing method, the electronic device may receive a plurality of push messages with a low priority at a time and perform centralized processing, so that power consumption can be further reduced, and efficiency can be improved.

In a possible design, the first processor is a large-core processor, and the second processor is a small-core processor.

In a possible design, the second processor is an intelligent sensor hub or a microcontroller unit.

According to a second aspect, this application provides an electronic device. The electronic device includes a display, a memory, and one or more processors. The memory is configured to store computer program code, and the computer program code includes computer instructions. When the computer instructions are executed by the one or more processors, the electronic device is enabled to perform the method according to any one of the first aspect or the possible designs of the first aspect.

According to a third aspect, this application provides a computer-readable storage medium, where the computer-readable storage medium stores a computer program, and when the computer program is run on an electronic device, the electronic device is enabled to perform the method described in any one of the first aspect or the possible designs of the first aspect.

According to a fourth aspect, this application provides a computer program product, where the computer program product includes a computer program or instructions, and when the computer program or the instructions are run on an electronic device, the electronic device is enabled to perform the method described in any one of the first aspect or the possible designs of the first aspect.

According to a fifth aspect, this application provides a chip system. The chip system includes one or more processors and a memory. The memory stores instructions. When the instructions are executed by the one or more processors, the method described in any one of the first aspect or the possible designs of the first aspect is implemented. The chip system may include a chip, or may include a chip and another discrete component.

For beneficial effect of the second aspect to the fifth aspect, refer to the beneficial effect of the first aspect. Details are not described herein again.

### BRIEF DESCRIPTION OF DRAWINGS

FIG. 1 is a diagram of an architecture of a system for displaying a push message;
FIG. 2 is a diagram of a hardware architecture of an electronic device according to an embodiment of this application;
FIG. 3 is a diagram of a software architecture of an electronic device according to an embodiment of this application;
FIG. 4 is a diagram of an architecture of a possible push system according to an embodiment of this application;
FIG. 5 is a diagram of an architecture of a possible push system according to an embodiment of this application;
FIG. 6 is a diagram of an architecture of a possible push system according to an embodiment of this application;
FIG. 7A and FIG. 7B are a schematic flowchart of a connection method according to an embodiment of this application;
FIG. 8 is a schematic flowchart of a possible display method according to an embodiment of this application;
FIG. 9a is a diagram of a display interface related to a push message according to an embodiment of this application;
FIG. 9b is a diagram of an interface for displaying a push message in a screen-off manner according to an embodiment of this application;
FIG. 9c is a diagram of an interface for displaying a push message in a screen-off manner according to an embodiment of this application;
FIG. 10 is a schematic flowchart of a possible display method according to an embodiment of this application;
FIG. 11(a) and FIG. 11(b) are a diagram of a display interface related to a push message according to an embodiment of this application;
FIG. 12 is a diagram of a display method according to an embodiment of this application;
FIG. 13 is a diagram of a display method according to an embodiment of this application; and
FIG. 14 is a diagram of a structure of an electronic device according to an embodiment of this application.

### DESCRIPTION OF EMBODIMENTS

To make objectives, technical solutions, and advantages of embodiments of this application clearer, the following further describes embodiments of this application in detail with reference to accompanying drawings.

The terms "first" and "second" below in the description of embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

For ease of understanding, concepts related to this application are described for reference by using examples.
(1) An electronic device may be a device having a display function. The display function may include a screen-off display function, a screen-on display function, and the like.

In some embodiments of this application, the electronic device may be a portable device, for example, a mobile phone, a tablet computer, a wearable device (for example, a watch or a band) with a wireless communication function, a vehicle-mounted terminal device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a smart home device (for example, a smart television or a smart speaker), a smart robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or a flight device (for example, a smart robot, an uncrewed aerial vehicle, or an aircraft).

The wearable device is a portable device that can be directly worn by a user or integrated into clothes or accessories of the user.

In some embodiments of this application, the electronic device may alternatively be a portable terminal device that further includes another function. An example embodiment of the portable terminal device includes but is not limited to a portable terminal device using iOS^{®}, Android^{®}, Microsoft^{®}, or another operating system. The portable terminal device may alternatively be another portable terminal device, for example, a laptop computer (laptop) with a touch-sensitive surface (for example, a touch panel). It should be further understood that in some other embodiments of this application, the electronic device may alternatively be a desktop computer with a touch-sensitive surface (for example, a touch panel), instead of the portable terminal device.

(2) Always on display (always on display, AOD) is a display technology that allows an electronic device to display useful information in a screen-off state (or an off-screen state). The technology allows a display of the electronic device to be partially lit up and display content without lighting up an entire display of the electronic device. Compared with a case in which the entire display is lit up (that is, in a screen-on state or a screen-on mode) to display content, the technology can reduce power consumption. According to the AOD technology, even when the electronic device is in the screen-off state (or referred to as entering a screen-off mode), some information (for example, a clock, a calendar, or a notification) may be displayed in a minimized form, so that the user can view the information anytime and anywhere in the most convenient way with low power consumption. In other words, in the screen-off state, the display of the electronic device may display specific information such as time and a notification to a limited extent. Because the AOD technology allows the electronic device to display a specific amount of information in the screen-off state, AOD is also referred to as screen-off display (or off-screen display).

It should be understood that in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following" or a similar expression thereof indicates any combination of these items, including a single item (piece) or any combination of a plurality of items (pieces). For example, at least one of a, b, or c may represent: a, b, c, a and b, a and c, b and c, or a, b and c, where a, b, and c may be a singular or plural number.

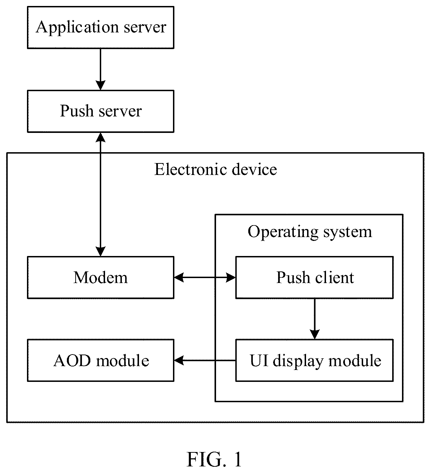

FIG. 1 is a diagram of an architecture of a system for displaying a push message. As shown in FIG. 1, the system may include an application server, a push (Push) server, and an electronic device. The application server is a server corresponding to an application installed on the electronic device, and the application server may send a push message corresponding to the application to the electronic device via the push server. The push server may be configured to distribute the push message from the application server to the electronic device.

As shown in FIG. 1, the electronic device may include a modem (Modem) (or referred to as a modem chip), an operating system, and an always on display (always on display, AOD) module. The modem may be configured to: receive the push message from the push server, and wake up the operating system to process the push message. The operating system may run on a main processor of the electronic device. The operating system may include a push client and a UI display module. The push client may be configured to: receive the push message from the modem, perform processing such as decryption and content parsing on the push message, and send the processed push message to the UI display module. The push client may be a system service (corresponding to the push server) in the electronic device, or may be a push service in a third-party application (corresponding to the application server) installed on the electronic device. When the electronic device is in a screen-on state, the UI display module may be configured to display the received push message on a display of the electronic device. When the electronic device is in a screen-off state, in an optional implementation, the UI display module may be configured to send the push message to the AOD module, and the AOD module may be configured to perform screen-off display on the received push message. In another optional implementation, the UI display module may be configured to control the electronic device to switch to the screen-on state before displaying the received push message.

In the foregoing several manners, each time the electronic device receives the push message in the screen-off state, the electronic device needs to wake up the operating system for processing, to display the push message. However, power consumption caused by waking up the operating system is high, and display efficiency of the push message is reduced. Especially when the electronic device frequently receives the push message, frequently waking up the operating system causes a large power consumption loss.

Based on the foregoing problem, to reduce a power consumption loss for displaying the push message by the electronic device, embodiments of this application provide a display method and an electronic device. In this solution, the push message can be displayed conveniently and efficiently, a power consumption loss for displaying the push message can be reduced, and display efficiency of the push message can be improved.

In addition, in the foregoing method, the electronic device establishes and maintains (or keeps alive) a connection to the push server via the push client. The push client and the push server need to perform an interaction process like negotiation according to a connection mechanism to establish a connection. In a process of maintaining the connection, the push client and the push server need to periodically send a heartbeat packet to each other according to a heartbeat mechanism, so that the push client and the push server can determine, based on the heartbeat packet, whether the connection is maintained or disconnected, and re-establish the connection when determining that the connection is disconnected. In the foregoing process, interaction information between the push client and the push server is forwarded via the modem. For example, a heartbeat packet sent by the push client may be forwarded to the push server via the modem, and the push client may receive the heartbeat packet that is from the push server and that is forwarded by the modem.

In the foregoing method, for the electronic device, processing of the interaction information in a connection establishment process needs to be completed by the push client in the operating system, processing of the heartbeat packet in a connection maintenance process needs to be completed by the push client in the operating system, and sending and receiving of the interaction information in a connection establishment and maintenance process also need to be participated by the push client in the operating system. Therefore, the operating system needs to be woken up each time a connection is established and each time a heartbeat packet is received, sent, and processed. Consequently, a large power consumption loss is caused. In conclusion, in a current process in which the electronic device establishes and maintains the connection to the push server, the operating system also needs to be frequently woken up. Consequently, a great power consumption loss is also caused.

Based on the foregoing problem, to reduce a power consumption loss in a process of establishing and maintaining the connection between the electronic device and the push server, embodiments of this application further provide a connection method and an electronic device. In this solution, a power consumption loss in a process of establishing and maintaining the connection between the electronic device and the push server can be reduced, and connection efficiency can be improved.

Optionally, the display method and the connection method provided in embodiments of this application may be combined into one solution and applied to the electronic device, or may be separately applied to the electronic device as independent solutions. For example, the electronic device may continue to perform the display method after performing the connection method, to reduce power consumption in an entire procedure in which the electronic device is connected to the connection server and exchanges the push message, and further reduce a power consumption loss on the electronic device side to a maximum extent.

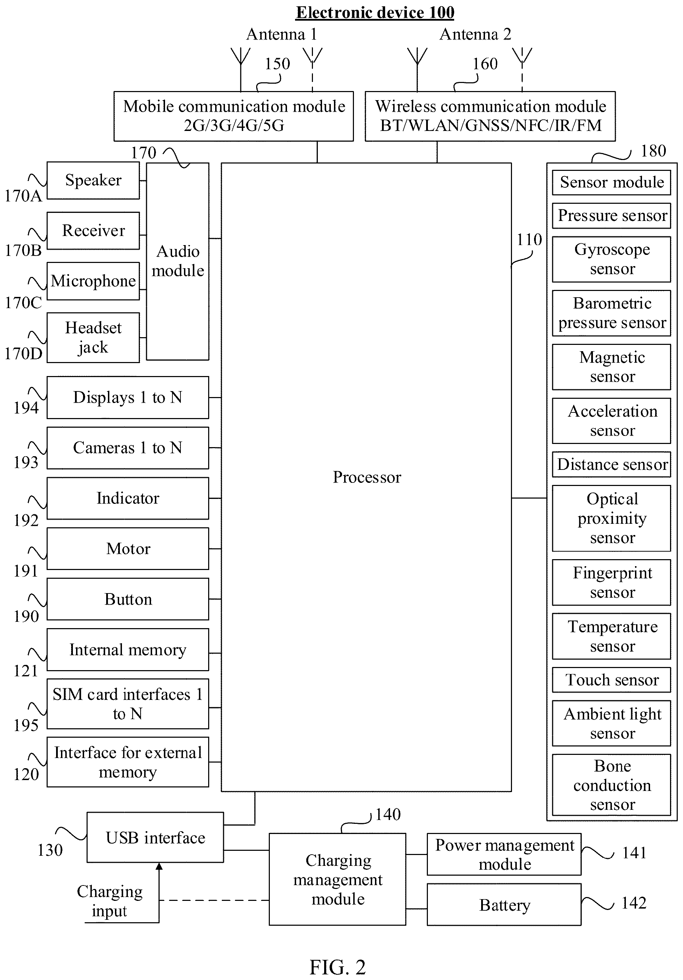

The following describes, with reference to FIG. 2, a structure of an electronic device to which a method provided in embodiments of this application is applicable.

As shown in FIG. 2, the electronic device 100 may include a processor 110, an interface 120 for external memory, an internal memory 121, a USB interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a SIM card interface 195, and the like.

The sensor module 180 may include a gyroscope sensor, an acceleration sensor, an optical proximity sensor, a fingerprint sensor, a touch sensor, a temperature sensor, a pressure sensor, a distance sensor, a magnetic sensor, an ambient light sensor, a barometric pressure sensor, a bone conduction sensor, and the like.

It may be understood that the electronic device 100 shown in FIG. 2 is merely an example, and does not constitute a limitation on the electronic device. In addition, the electronic device may have more or fewer components than those shown in the figure, or a combination of two or more components, or an arrangement of different components. Various components shown in FIG. 2 may be implemented in hardware including one or more signal processing and/or application-specific integrated circuits, software, or a combination of hardware and software.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

Execution of the display method provided in embodiments of this application may be completed by the processor 110 by controlling or invoking another component. For example, a processing program in embodiments of this application stored in the internal memory 121 is invoked, or a processing program in embodiments of this application stored in a third-party device is invoked by using the interface 120 for external memory, to control the wireless communication module 160 to perform data communication with another device, so as to improve intelligence and convenience of the electronic device 100 and improve user experience. The processor 110 may include different components. For example, when a CPU and a GPU are integrated, the CPU and the GPU may cooperate to perform the display method provided in embodiments of this application. For example, in the display method, some algorithms are executed by the CPU, and some other algorithms are executed by the GPU, to achieve high processing efficiency.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1. The display 194 may be configured to display information entered by a user or information provided for the user and various graphical user interfaces (graphical user interface, GUI). For example, the display 194 may display a push message.

In this embodiment of this application, the display 194 may be an integrated flexible display, or may be a spliced display including two rigid screens and one flexible screen located between the two rigid screens.

The camera 193 (a front-facing camera or a rear-facing camera, or a camera that can serve as a front-facing camera and a rear-facing camera) is configured to capture a static image or a video. Usually, the camera 193 may include a photosensitive element, for example, a lens group and an image sensor. The lens group includes a plurality of lenses (convex lens or concave lens), and is configured to: collect an optical signal reflected by a to-be-photographed object, and transfer the collected optical signal to the image sensor. The image sensor generates an original image of the to-be-photographed object based on the optical signal.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, code of an application (for example, a function corresponding to the solution of this application), and the like. The data storage area may store data created in a process of using the electronic device 100, and the like.

The internal memory 121 may further store one or more computer programs corresponding to the algorithms in the solutions of this application. The one or more computer programs are stored in the internal memory 121 and are configured to be executed by the one or more processors 110. The one or more computer programs include instructions, and the instructions may be used to perform steps in the following embodiments.

In addition, the internal memory 121 may include a high-speed random access memory, or may include a nonvolatile memory, for example, at least one magnetic disk storage device, a flash memory, or a universal flash storage (universal flash storage, UFS).

Certainly, code of the algorithms in the solutions of embodiments of this application may alternatively be stored in an external memory. In this case, the processor 110 may run, through the interface 120 for external memory, the code of the algorithms in the solutions of this application stored in the external memory.

The touch sensor is also referred to as a "touch panel". The touch sensor may be disposed on the display 194, and the touch sensor and the display 194 form a touchscreen, which is also referred to as a "touch screen". The touch sensor is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor may alternatively be disposed on a surface of the electronic device 100, and is at a position different from that of the display 194.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110. In this embodiment of this application, the mobile communication module 150 may be further configured to: exchange information with another device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal via an audio apparatus (not limited to the speaker 170A, the receiver 170B, or the like), or displays content via the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2. In embodiments of this application, the wireless communication module 160 may be configured to establish a connection to another electronic device, to exchange data. Alternatively, the wireless communication module 160 may be configured to access an access point device, send a control instruction to another electronic device, or receive data sent by another electronic device.

In addition, the electronic device 100 may implement an audio function, for example, music playing and recording, through the audio module 170, the speaker 170A, the receiver 170B, the microphone 170C, the headset jack 170D, the application processor, and the like. The electronic device 100 may receive input from the button 190, and generate button signal input related to user settings and function control of the electronic device 100. The electronic device 100 may generate a vibration prompt (for example, an incoming call vibration prompt) by using the motor 191. The indicator 192 in the electronic device 100 may be an indicator light, and may indicate a charging status or a power change, or may indicate a message, a missed call, a notification, or the like. The SIM card interface 195 in the electronic device 100 is configured to connect to a SIM card. The SIM card may be inserted into the SIM card interface 195 or removed from the SIM card interface 195, to implement contact with or separation from the electronic device 100.

It should be understood that, in actual application, the electronic device 100 may include more or fewer components than those shown in FIG. 2. This is not limited in embodiments of this application. The electronic device 100 shown in the figure is merely an example, and the electronic device 100 may have more or fewer components than those shown in the figure, or a combination of two or more components, or an arrangement of different components. The components shown in the figure may be implemented in hardware including one or more signal processing and/or application-specific integrated circuits, software, or a combination of the hardware and software.

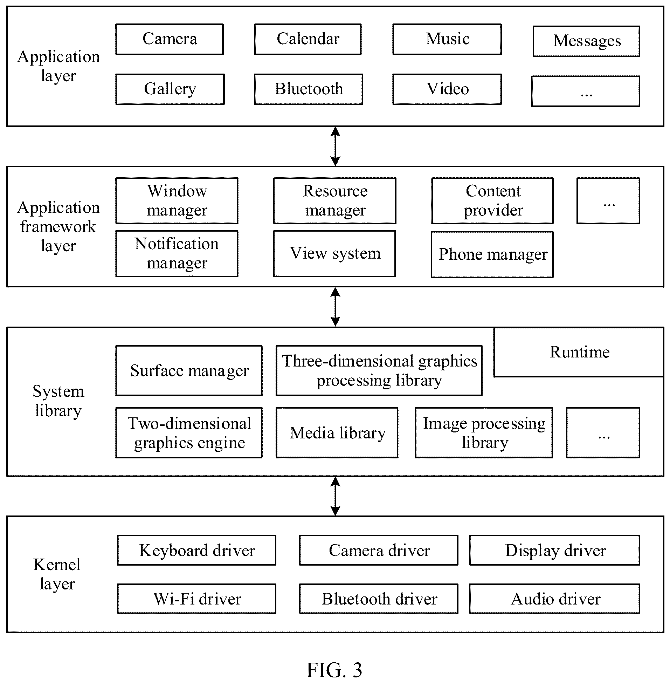

A software system of the electronic device 100 may use a layered architecture, an event-driven architecture, a microkernel architecture, a microservice architecture, or a cloud architecture. In a layered architecture, software is divided into several layers, and each layer has a clear role and task. The layers communicate with each other through a software interface. For example, as shown in FIG. 3, the software architecture may be divided into four layers: an application layer, an application framework (framework, FWK) layer, a runtime and system library, and a (Linux) kernel (kernel) layer from top to bottom.

The application layer is an uppermost layer of the operating system, includes a native application of the operating system, such as Camera, Gallery, Calendar, Bluetooth, Music, Video, and Messages, and may further include a third-party application. An application program in embodiments of this application is briefly referred to as an application (application, APP), and is a software program that can implement one or more specific functions. Generally, a plurality of applications may be installed on the electronic device, for example, a camera application and an email application. An application mentioned below may be a system application installed when the electronic device is delivered from the factory, or may be a third-party application downloaded by a user from a network or obtained by the user from another electronic device during use of the electronic device.

Certainly, a developer may compile an application and install the application at the layer. In a possible implementation, the application may be developed by using a Java language, and is completed by invoking an application programming interface (application programming interface, API) provided by an application framework layer. A developer may interact with a bottom layer (for example, a kernel layer) of an operating system through an application framework, to develop an application of the developer.

The application framework layer is an API and a programming framework of the application layer. The application framework layer may include some predefined functions. The application framework layer may include a window manager, a content provider, a view system, a phone manager, a resource manager, a notification manager, and the like.

The window manager is configured to manage a window program. The window manager may obtain a display size, determine whether there is a status bar, lock a display (or a screen), take a screenshot, and the like.

The content provider is configured to: store and obtain data, and enable the data to be accessed by an application program. The data may include information, for example, a file (for example, a document, a video, an image, or audio) and text.

The view system includes visual controls, for example, controls that display content, for example, texts, pictures, and documents. The view system may be configured to construct an application. An interface in a display window may include one or more views. For example, a display interface including an SMS message notification icon may include a text display view and an image display view.

The phone manager is configured to provide a communication function of the electronic device. The notification manager enables an application to display notification information in a status bar, and may be configured to convey a notification message. The notification manager may automatically disappear after a short pause without requiring a user interaction.

A runtime includes a core library and a virtual machine. The runtime is responsible for scheduling and management of the system.

The core library of the system may include two parts: a function that needs to be invoked by using the Java language, and a core library of the system. The application layer and the application framework layer run on the virtual machine. Java is used as an example. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager, a media library, a three-dimensional graphics processing library (for example, OpenGL ES), a two-dimensional graphics engine (for example, SGL), and an image processing library. The surface manager is configured to manage a display subsystem and provide fusion of two-dimensional and three-dimensional graphics layers for a plurality of applications. The media library supports playback and recording in a plurality of commonly used audio and video formats, and static image files. The media library can support a plurality of audio and video coding formats, such as MPEG-4, H.564, MP3, AAC, AMR, JPG, and PNG. The three-dimensional graphics processing library is configured to implement three-dimensional graphics drawing, image rendering, composition, layer processing, and the like. The two-dimensional graphics engine is a drawing engine for two-dimensional drawing.

The kernel layer provides a core system service of the operating system. For example, security, memory management, process management, a network protocol stack, and a driver model are all implemented based on the kernel layer. The kernel layer is also used as an abstraction layer between hardware and a software stack. The layer has many drivers related to the electronic device, mainly including a display driver, a driver of a keyboard used as an input device, a flash driver that is based on a memory technology device, a camera driver, an audio driver, a Bluetooth driver, a Wi-Fi driver, and the like.

It should be understood that the function service described above is merely an example. In actual application, the electronic device may alternatively be divided into more or fewer function services based on other factors, or may be divided into functions of each service in another manner, or may not be divided into function services, but operates as a whole.

Optionally, the solutions provided in embodiments of this application may be applied to a scenario in which the electronic device receives, processes, and displays a push message. The electronic device may display the push message in a screen-off state or a screen-on state.

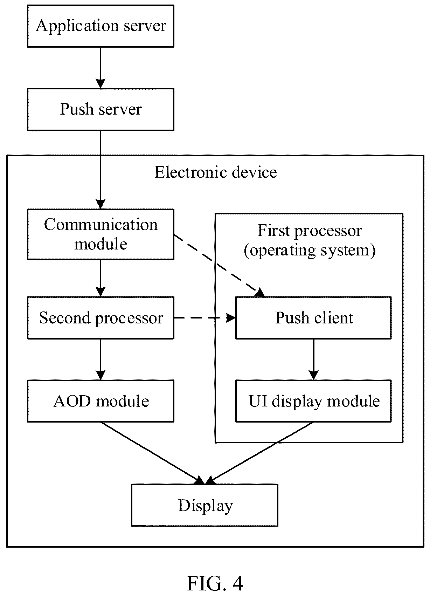

The solutions provided in embodiments of this application may be applied to a push system, and the push system includes at least an electronic device (for example, an electronic device shown in FIG. 4). Optionally, the push system may further include at least one server (for example, an application server and a push server shown in FIG. 4), and the at least one server may be configured to send a push message to the electronic device. The electronic device may process the received push message (for example, perform processing such as decryption, content parsing, and display).

FIG. 4 is a diagram of an architecture of a possible push system according to an embodiment of this application. For example, as shown in FIG. 4, the push system may include the electronic device, the application server, and the push server.

In some embodiments of this application, the application server may be a server corresponding to an application installed on the electronic device. The application server may send a push message corresponding to the application to the electronic device via the push server. The push server may distribute the push message from the application server to the electronic device.

Optionally, the push server may be a server corresponding to the electronic device, for example, may be a server of a manufacturer of the electronic device.

Optionally, the application server may be a cloud server. Optionally, the push server may be a cloud server.

In some embodiments of this application, as shown in FIG. 4, the electronic device may include a communication module, a first processor, a second processor, an AOD module, and a display. The communication module may be configured to: receive a push message from a server (for example, the push server), and send the push message to the first processor or the second processor for subsequent processing. The first processor or the second processor may be configured to process the push message and control the display to display the push message. The AOD module may be configured to control the display to display the push message in a screen-off manner. The display may be configured to display the push message.

In a possible solution, the communication module may be a mobile communication module. For example, the communication module may be a modem. In another possible solution, the communication module may be a wireless communication module. For example, the communication module may be a Wi-Fi communication module.

In some embodiments of this application, the first processor may be a main processor, and the second processor may be a coprocessor or a secondary processor. Compared with the first processor, the second processor runs at lower power consumption.

Optionally, the first processor is a large-core processor, and the second processor is a small-core processor.

Optionally, the first processor may be an application processor, a CPU, or the like. Optionally, the second processor may be an intelligent sensor hub (sensor hub), a microcontroller unit (microcontroller unit, MCU), or the like.

In some embodiments of this application, as shown in FIG. 4, an operating system may run on the first processor, and the operating system may include a push client and a UI display module.

Optionally, a software architecture of the operating system may be implemented by using the software architecture shown in FIG. 3.

In a first possible solution, the communication module may be configured to: after receiving the push message from the server, when determining that the electronic device is in a screen-off state, send the push message to the second processor for processing. Alternatively, the communication module may be configured to: after receiving the push message from the server, when determining that the electronic device is in a screen-on state, send the push message to the push client in the operating system for processing.

Based on the first possible solution, the push client may be configured to: receive the push message from the communication module, perform processing such as decryption and content analysis on the received push message, and send the processed push message to the UI display module. The UI display module may be configured to control the display to display the push message in the screen-on state.

In a possible implementation, the second processor may be specifically configured to: receive the push message from the communication module, perform processing such as decryption and content analysis on the received push message, and send the processed push message to the AOD module. The AOD module may be configured to control the display to display the push message in a screen-off manner.

In another possible implementation, the second processor may be specifically configured to: when the electronic device is in the screen-off state, receive the push message from the communication module, and cache the received push message. The second processor may be further configured to: when the electronic device switches from the screen-off state to the screen-on state, send the cached push message to the push client. The push client may be configured to: receive the push message from the second processor, perform processing such as decryption and content analysis on the received push message, and send the processed push message to the UI display module. The UI display module may be configured to control the display to display the push message in the screen-on state.

In still another possible implementation, the second processor may be specifically configured to: when the electronic device is in the screen-off state, receive the push message from the modem, perform processing such as decryption and content analysis on the received push message, and cache the processed push message. The second processor may be further configured to: when the electronic device switches from the screen-off state to the screen-on state, send the cached push message to the UI display module. The UI display module may control the display to display the push message in the screen-on state. The second processor may directly send the cached push message to the UI display module, or may send the cached push message to the UI display module via the push client.

In a second possible solution, the communication module may be configured to: after receiving the push message from the server, send the push message to the second processor for corresponding processing. The second processor may be configured to: when receiving the push message from the communication module and determining that the electronic device is in the screen-on state, send the push message to the push client in the operating system. The push client may be configured to perform processing such as decryption and content analysis on the received push message, and sends the processed push message to the UI display module for subsequent display. The second processor may be configured to: when receiving the push message from the communication module and determining that the electronic device is in the screen-off state, process the received push message according to the method in the first possible solution.

In a third possible solution, the electronic device or another module that is in the electronic device and that is configured to monitor a status of the electronic device may monitor the status of the electronic device, and notify the communication module or the second processor when detecting that the status of the electronic device changes, so that the communication module or the second processor determines the status of the electronic device, and processes (for example, distributes) the push message based on the status of the electronic device.

The second processor in this embodiment of this application may be located on a chip in the electronic device, or the second processor in this embodiment of this application may be replaced with a chip.

It should be understood that the foregoing push system architecture is merely an example. In an actual push system, the electronic device may alternatively be divided into more or fewer functional modules based on another factor, or may be divided into functions of each module in another manner, or may not be divided into functional modules, but operates as a whole.

In some embodiments of this application, in the push system shown in FIG. 4, when the communication module in the electronic device is a modem, the electronic device may establish and maintain (or keep alive) a connection (where the connection may also be referred to as a communication connection, a push connection, a network connection, or the like) to the push server via the modem. When the communication module in the electronic device is a wireless communication module, for example, a Wi-Fi communication module, the electronic device may establish and maintain a connection to the push server via the second processor. Information (for example, a data packet or a heartbeat packet) exchanged between the second processor and the push server may be forwarded via the wireless communication module.

In the foregoing method, the electronic device may trigger, via the push client, establishment of the connection, and configure a connection manner for establishing the connection and configuration information corresponding to the connection manner. The push client may send the configuration information corresponding to the configured connection manner to a component (for example, the modem or the second processor) corresponding to the connection manner, so that the component implements the connection in the connection manner based on the configuration information.

In some embodiments of this application, the electronic device and the push server may be connected according to an existing connection mechanism. The connection between the electronic device and the push server may be maintained (or kept alive) according to a heartbeat mechanism. Specifically, the heartbeat mechanism is a manner used to detect a status of a connection between two ends. According to the heartbeat mechanism, a client (namely, the communication module or the second processor) may periodically send a heartbeat packet (or referred to as a heartbeat data packet) to a server (namely, the push server), and the server feeds back the heartbeat packet to the client each time after receiving the heartbeat packet. When the client can receive the heartbeat packet (namely, a heartbeat reply packet) fed back by the server, it may be determined that the connection between the client and the server is maintained. When the client cannot receive the heartbeat packet fed back by the server, it may be determined that the connection between the client and the server is disconnected, and the client may actively reconnect to the server.

It should be noted that, in this embodiment of this application, scheduled sending may be understood as periodic sending, and scheduled sending of a heartbeat packet in this embodiment of this application may be understood as periodic sending of a heartbeat packet. A period of periodic sending may be a set heartbeat period.

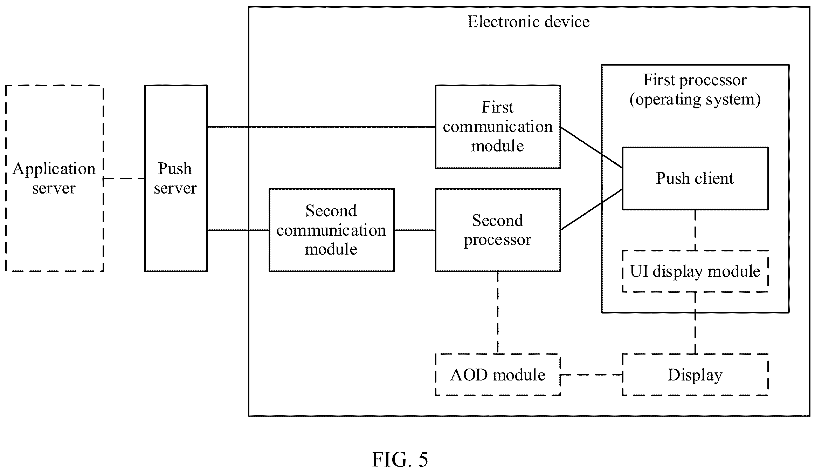

According to the foregoing method, for an architecture of another possible push system provided in embodiments of this application, refer to FIG. 5. As shown in FIG. 5, the push system includes at least an electronic device and a push server. The electronic device includes at least a first communication module, a second communication module, a first processor, and a second processor.

Optionally, as shown in FIG. 5, the first communication module may be a modem. Optionally, the second communication module may be a wireless communication module. For example, as shown in FIG. 5, the second communication module may be a Wi-Fi communication module or the like. It should be noted that, in some embodiments, the communication module shown in FIG. 4 may be the first communication module or the second communication module shown in FIG. 5.

In a possible manner, the electronic device may establish and maintain a connection to the push server via the first communication module. In another possible manner, the electronic device may establish and maintain a connection to the push server via the second processor. Interaction information in a process of establishing and maintaining a connection between the second processor and the push server may be forwarded via the second communication module.

As shown in FIG. 5, an operating system may run on the first processor, and the operating system includes at least a push client. In some embodiments of this application, the push client may be configured to trigger the electronic device to establish the connection to the push server, and may configure a manner in which the electronic device establishes the connection to the push server and configuration information corresponding to the manner. For example, the push client may determine, from the foregoing two possible manners, one manner as a manner in which the electronic device establishes the connection to the push server, and determine configuration information corresponding to the manner. After the electronic device is triggered to establish the connection to the push server, and the manner in which the electronic device establishes the connection to the push server and the configuration information corresponding to the manner are configured, the push client may send the configuration information corresponding to the manner to a component (for example, the first communication module or the second processor) corresponding to the manner, so that the component establishes a connection to the push server in the manner based on the configuration information corresponding to the manner, and maintains the connection to the push server in the manner.

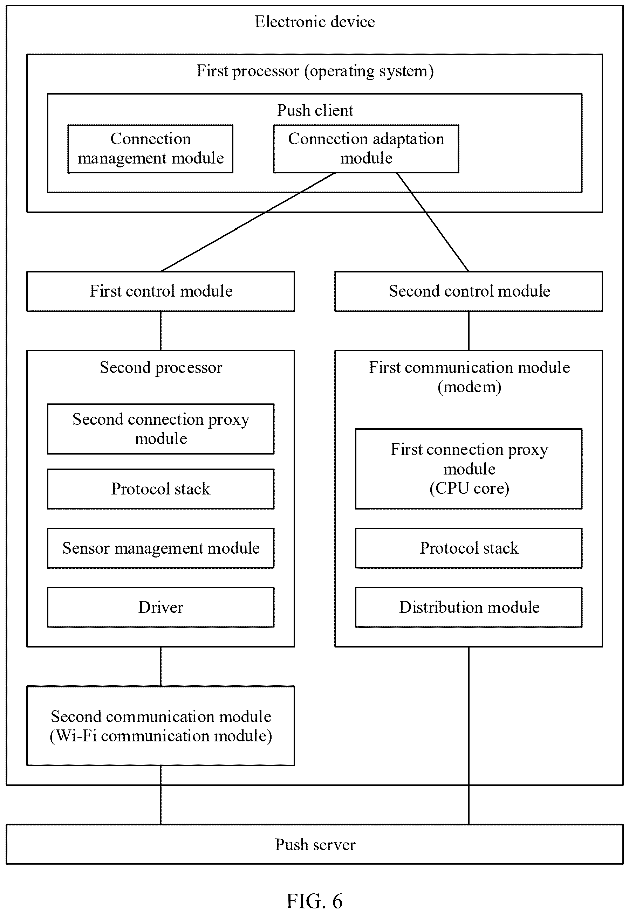

In some embodiments of this application, as shown in FIG. 6, in addition to the first communication module, the second communication module, the first processor, and the second processor shown in FIG. 5, the electronic device shown in FIG. 5 may further include a first control module and a second control module. The push client in the operating system running on the first processor shown in FIG. 5 may specifically include a connection management module and a connection adaptation module. The first communication module shown in FIG. 5 may specifically include a first connection proxy module, a protocol stack, a distribution module, and the like. The second processor shown in FIG. 5 may specifically include a second connection proxy module, a protocol stack, a sensor manager (sensor manager), a driver (driver), and the like.

The connection management module in the push client may be configured to perform connection management based on a network status and a capability of the electronic device, and may be specifically configured to determine, based on the network status and the capability of the electronic device, a manner of connecting to the push server. For example, when determining, based on the network status and the capability, that mobile communication quality of the electronic device is better than wireless communication quality, the connection management module may determine to connect to the push server in a mobile communication manner, that is, establish a connection to the push server via the modem. For another example, when determining, based on the network status and the capability, that wireless communication quality of the electronic device is better than mobile communication quality, the connection management module may determine to connect to the push server in a wireless communication manner, that is, establish a connection to the push server via the second processor. The connection adaptation module in the push client may configure, in the connection manner determined by the connection management module, configuration information corresponding to the manner, and deliver the configuration information to a control module corresponding to a component corresponding to the manner.

The first control module corresponds to the first communication module, and the first control module may be configured to connect the first processor (or the operating system running on the first processor) to the first communication module. The second control module corresponds to the second processor and the second communication module, and the second control module may be configured to connect the first processor (or the operating system running on the first processor) to the second processor. Optionally, the first control module and the second control module may be deployed on a same chip or different chips in the electronic device. Optionally, the first control module and the first communication module may be deployed on different chips in the electronic device, and the second control module and the second processor may be deployed on different chips in the electronic device. Specifically, the first control module may be configured to provide a connection proxy service interface in a mobile network. The interface is configured to connect the push client (or the connection adaptation module in the push client) to the first communication module. The first control module may be further configured to control starting and stopping of establishing and maintaining the connection to the push server via the first communication module. Optionally, the first control module may be a modem engine (engine) deployed in a telephony (telephony) service. The second control module may be configured to provide a connection proxy service interface in a wireless network. The interface is configured to connect the push client (or the connection adaptation module in the push client) to the second processor, and the second processor is connected to the second communication module. The second control module may be further configured to control starting and stopping of establishing and maintaining the connection to the push server via the second processor (and the second communication module).

The first connection proxy module in the first communication module may be configured to: create/end/reestablish a connection to the push server according to a connection protocol, maintain a connection to the push server according to a heartbeat mechanism, detect a mobile network status and report a detection result to the push client, cache a push message, transmit the push message, and the like. Optionally, as shown in FIG. 6, the first connection proxy module may be a CPU core (C-Core). The protocol stack in the first communication module may be configured to provide protocol-related content required by another module. For example, the protocol stack may include a transport layer security (transport layer security, TLS) protocol (protocol) stack, a packet data convergence protocol (packet data convergence protocol, PDCP) stack, and the like. The distribution module may be configured to distribute the push message. For example, the distribution module may be a content distribution service (content distribution service, CDS).

The first connection proxy module in the second processor may be configured to: create/end/reestablish a connection to the push server according to a connection protocol, maintain a connection to the push server according to a heartbeat mechanism, perform wireless network status detection and report a detection result to the push client, cache a push message, transmit the push message, and the like. The protocol stack in the second processor may be configured to provide protocol-related content required by another module. For example, the protocol stack may include a TLS protocol stack. The sensor management module may be configured to create the first connection proxy module. The driver may be configured to drive the second communication module.

In some embodiments of this application, as shown in FIG. 5, the push system may further include an application server. The electronic device may further include an AOD module and a display. The operating system may further include a UI display module. For functions of the systems, devices, modules, services, or components shown in FIG. 5, in addition to the descriptions corresponding to FIG. 5, refer to the descriptions corresponding to FIG. 4 in the foregoing embodiment. Details are not described herein again.

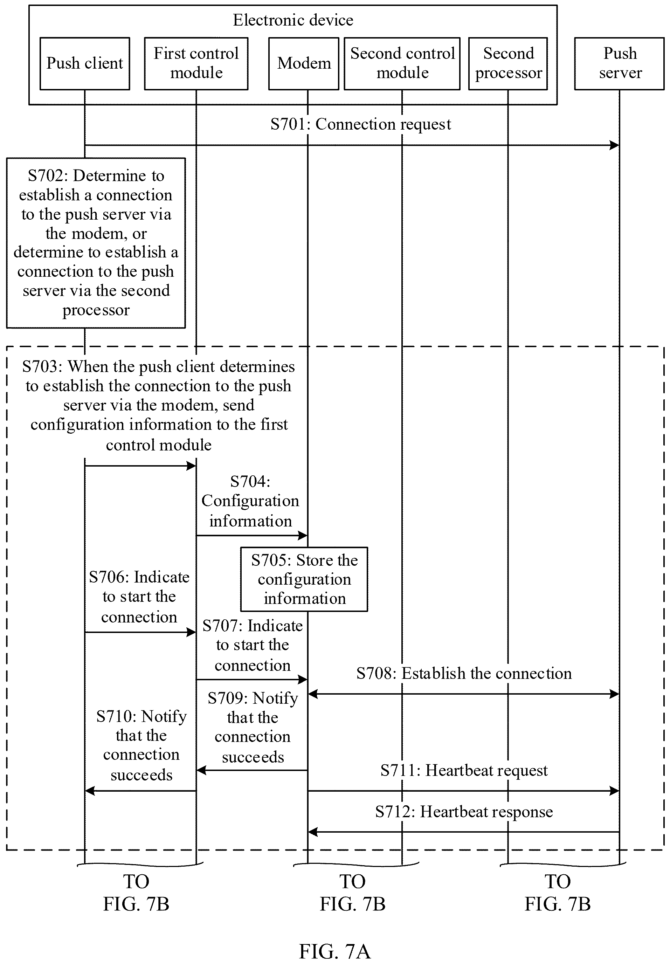

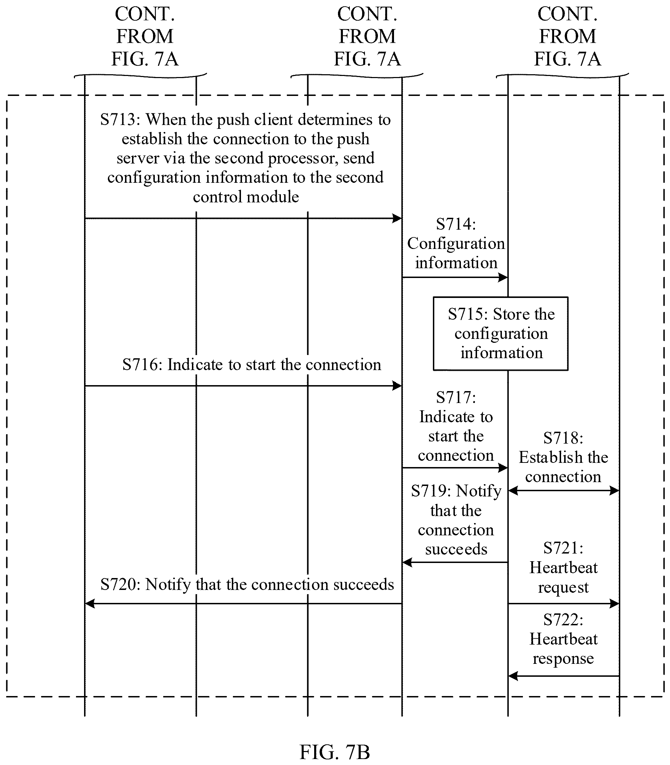

Based on the foregoing descriptions related to FIG. 5 and FIG. 6, an example in which the first communication module is a modem and the second communication module is a Wi-Fi communication module is used. For a connection method provided in an embodiment of this application, refer to FIG. 7A and FIG. 7B. As shown in FIG. 7A and FIG. 7B, the method may include the following steps.

S701: A push client in an electronic device sends a connection request to a push server, where the connection request is used to request to establish a connection to the push server.

The push client may forward the connection request to the push server via a modem or a Wi-Fi communication module.

Optionally, after receiving, from the push server, a connection response used to determine to establish the establishment, the push client may continue to perform the following step S702.

S702: The push client determines to establish a connection to the push server via the modem, or determines to establish a connection to the push server via a second processor.

When the push client determines to establish the connection to the push server via the modem, the following steps S703 to S712 continue to be performed; or when the push client determines to establish the connection to the push server via the second processor, the following steps S713 to S722 continue to be performed.

The modem corresponds to a mobile connection manner, and the second processor corresponds to a Wi-Fi connection manner.

Optionally, step S702 may be performed by a connection management module in the push client.

S703: When determining to establish the connection to the push server via the modem, the push client sends configuration information to a first control module.

The configuration information is used to control the modem to establish the connection to the push server. The configuration information may be determined by a connection proxy adaptation module in the push client.

S704: The first control module sends the configuration information to the modem.

Optionally, the first control module may send the configuration information to a first connection proxy module in the modem.

S705: The modem stores the configuration information.

Optionally, step S705 may be performed by the first connection proxy module in the modem.

S706: The push client indicates the first control module to start the connection.

S707: The first control module indicates the modem to start the connection.

Optionally, the first control module may indicate the first connection proxy module in the modem to start the connection.

S708: The modem establishes the connection to the push server based on the stored configuration information.

Optionally, the modem may establish the connection to the push server based on the stored configuration information by performing, with the push server, procedures such as a three-way handshake according to the transmission control protocol (transmission control protocol, TCP), TLS negotiation, and device registration. The process may be implemented based on a procedure specified in a related standard, and details are not described herein again.

Optionally, step S708 may be cooperatively completed by a plurality of modules such as the first connection proxy module, a protocol stack, and a distribution module in the modem.

S709: After establishing the connection to the push server, the modem notifies the first control module that the connection succeeds.

S710: The first control module notifies the push client that the connection succeeds.

S711: After establishing the connection to the push server, the modem periodically sends a heartbeat request to the push server.

S712: The modem receives a heartbeat response from the push server.

When receiving the heartbeat response from the push server, the modem may determine that a status of the connection between the modem and the push server is normal.

In some embodiments of this application, when the modem does not receive the heartbeat response from the push server, the modem may send a disconnection notification to the push client. After receiving the disconnection notification, the push client performs step S701 and subsequent steps to re-establish the connection to the push server. The disconnection notification is used to notify that the connection to the push server is disconnected. The modem may send the disconnection notification to the push client via the first control module.

Optionally, steps S711 and S712 may be cooperatively completed by a plurality of modules such as the first connection proxy module, the protocol stack, and the distribution module in the modem.

S713: When determining to establish the connection to the push server via the second processor, the push client sends configuration information to a second control module.

The configuration information is used to control the second processor to establish a connection to the push server. The configuration information may be determined by a connection proxy adaptation module in the push client.

S714: The second control module sends the configuration information to the second processor.

Optionally, the second control module may send the configuration information to a second connection proxy module in the second processor.

S715: The second processor stores the configuration information.

Optionally, step S715 may be performed by the second connection proxy module in the second processor.

S716: The push client indicates the second control module to start the connection.

S717: The second control module indicates the second processor to start the connection.

Optionally, the second control module may indicate the second connection proxy module in the second processor to start the connection.

S718: The second processor establishes the connection to the push server based on the stored configuration information.

Optionally, the second processor may establish the connection to the push server based on the stored configuration information by performing, with the push server, procedures such as a three-way handshake according to the transmission control protocol (transmission control protocol, TCP), TLS negotiation, and device registration. These procedures may be implemented based on procedures specified in a related standard, and details are not described herein.

Optionally, step S718 may be cooperatively completed by a plurality of modules such as the second connection proxy module, a protocol stack, and a distribution module in the second processor.

S719: After establishing the connection to the push server, the second processor notifies the second control module that the connection succeeds.

S720: The second control module notifies the push client that the connection succeeds.

S721: After establishing the connection to the push server, the second processor periodically sends a heartbeat request to the push server.

S722: The second processor receives a heartbeat response from the push server.

When receiving the heartbeat response from the push server, the second processor may determine that a status of the connection between the second processor and the push server is normal.

In some embodiments of this application, when the second processor does not receive the heartbeat response from the push server, the second processor may send a disconnection notification to the push client. After receiving the disconnection notification, the push client performs step S701 and subsequent steps to re-establish the connection to the push server. The disconnection notification is used to notify that the connection to the push server is disconnected. The second processor may send the disconnection notification to the push client via the second control module.

In the foregoing method, information exchanged between the second processor and the push server may be forwarded via the Wi-Fi communication module.

Optionally, steps S721 and S722 may be cooperatively completed by a plurality of modules such as the second connection proxy module, the protocol stack, and the distribution module in the second processor.

In the foregoing method, the push client may be configured to trigger establishment of the connection to the push server and confirm that the connection succeeds. A specific process of establishing the connection and a process of maintaining the connection by periodically sending and receiving heartbeat packets after the connection is established may be completed by the modem or the second processor with a low power consumption loss. Therefore, a quantity of times that an operating system to which the push client belongs is woken up can be greatly reduced, a problem that a power consumption loss is large because the operating system is frequently woken up is resolved, and an overall power consumption loss of the electronic device is reduced.

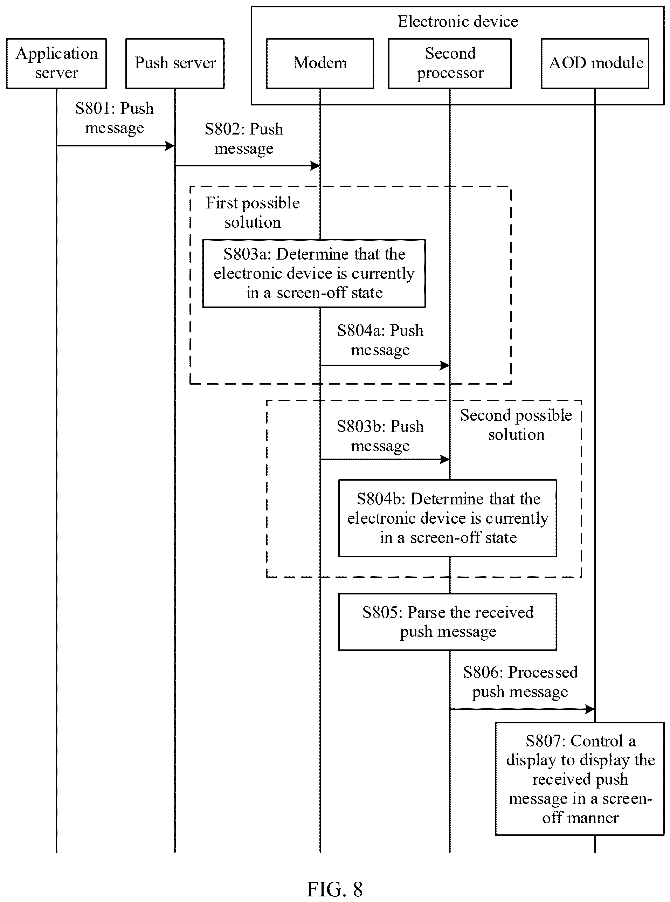

Based on the foregoing descriptions, an example in which a communication module (or a communication component) of an electronic device is a modem is used. For a display method provided in an embodiment of this application, refer to FIG. 8. The display method may be applied to the electronic device shown in FIG. 4 or FIG. 5. For a display method when the communication module is another component or module, refer to the method shown in FIG. 8. Details are not described herein again.

In some embodiments of this application, the display method may be performed after the connection method provided in the foregoing embodiment.

As shown in FIG. 8, the display method may include the following steps.

S801: An application server sends a push message to a push server.

S802: The push server sends the push message to the modem in the electronic device.

In some embodiments of this application, the push message may have a priority, and priorities of different push messages may be different or may be the same. For example, the priority of the push message may be determined based on information such as importance of the push message and an application type corresponding to the push message. This is not specifically limited in embodiments of this application. The push server may determine, based on the priority of the push message, a manner of sending the push message to the electronic device. In an optional implementation, after receiving a push message, the push server may directly send the push message to the electronic device when determining that a priority of the push message is higher than a specified priority. After receiving a push message, the push server may cache the push message when determining that a priority of the push message is lower than or equal to the specified priority. When a quantity of a plurality of push messages that are cached in the push server and that need to be sent to the electronic device reaches a specified value, the push server may simultaneously send the plurality of push messages to the electronic device.

In a first possible solution, the following steps S803a and S804a may be performed after step S802.

S803a: The modem determines that the electronic device is currently in a screen-off state.

In an optional implementation, the modem may monitor a status of the electronic device, to determine whether the electronic device is in the screen-off state. In another optional implementation, the modem may determine, based on a notification of the electronic device or another module that is in the electronic device and that is configured to detect the status of the electronic device, that the electronic device is in the screen-off state. For example, the electronic device or the another module that is in the electronic device and that is configured to detect the status of the electronic device may monitor the status of the electronic device, and notify the modem when detecting that the electronic device enters the screen-off state, so that the modem determines that the electronic device is in the screen-off state. The electronic device or the another module that is in the electronic device and that is configured to detect the status of the electronic device may further notify the modem when detecting that the electronic device switches from the screen-off state to a screen-on state, so that the modem determines that the electronic device is not in the screen-off state.

S804a: The modem sends the push message to a second processor in the electronic device.

After step S804a, steps S805 to S807 described below may be performed.

In a second possible solution, the following steps S803b and S804b may be performed after step S802.

S803b: The modem sends the push message to a second processor in the electronic device.

S804b: The second processor determines that the electronic device is currently in a screen-off state.

The second processor may determine a status of the electronic device with reference to the manner in which the modem determines the status of the electronic device in step S803a, to determine whether the electronic device is in the screen-off state. Details are not described herein again.

After step S804b, steps S805 to S807 described below may be performed.

S805: The second processor parses the received push message.

S806: The second processor sends the processed push message to an AOD module in the electronic device.

S807: The AOD module controls a display to display the received push message in a screen-off manner.

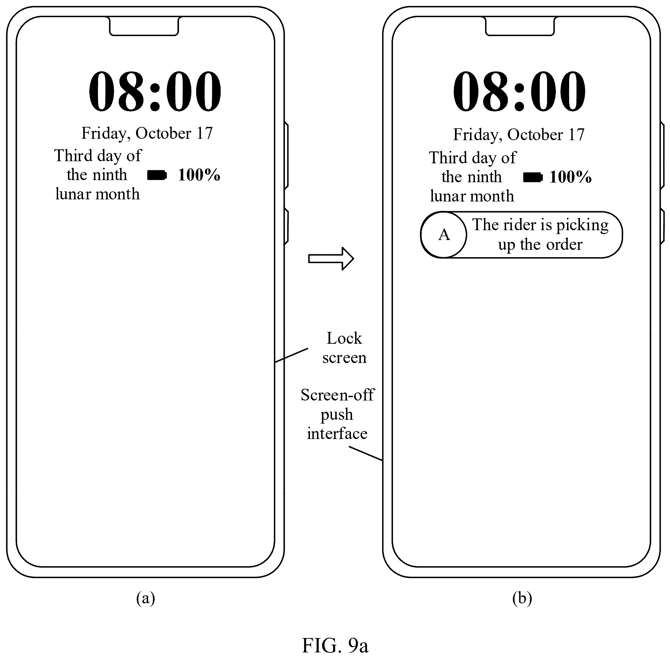

Example 1: For example, the electronic device is a mobile phone, and an application installed on the electronic device is a take-out application A. The push message may be an order progress push message of the take-out application A. When order progress corresponding to the take-out application A is updated, the application server may send, to the electronic device via the push server, an order progress push message corresponding to latest order progress. The modem in the electronic device may receive the order progress push message. As shown in (a) in FIG. 9a, when the electronic device is in the screen-off state, the display of the electronic device may display a lock screen. When the modem in the electronic device in the screen-off state receives the order progress push message (for example, "The rider is picking up the order") corresponding to the take-out application A, the modem may send the order progress push message to the second processor in the electronic device. The second processor may parse the order progress push message, and send the processed order progress push message to the AOD module in the electronic device. The AOD module may control the display of the electronic device to display the order progress push message in a screen-off manner. In this case, the display of the electronic device may switch from displaying the lock screen interface shown in (a) in FIG. 9a to displaying a screen-off push interface shown in (b) in FIG. 9a. The interface includes the order progress push message displayed in a screen-off display manner, that is, the message "The rider is picking up the order".

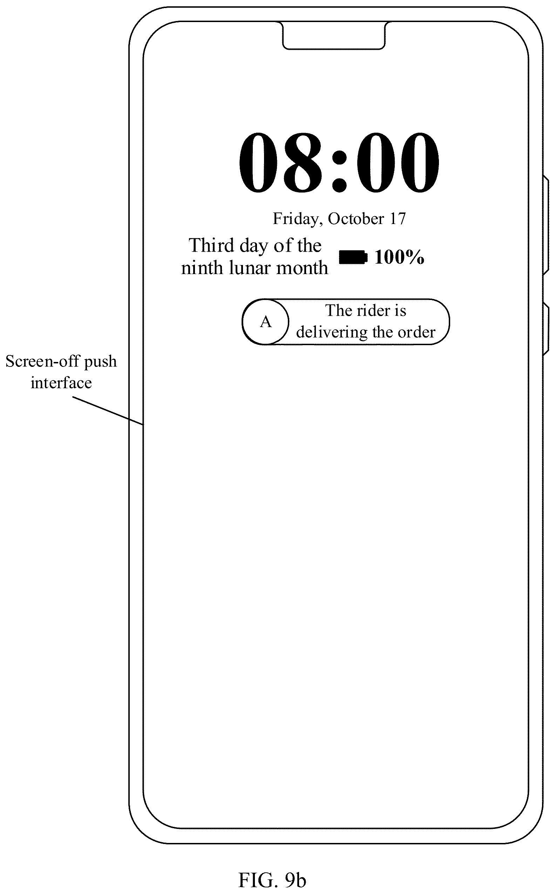

Example 2: Based on Example 1, after the electronic device displays the interface shown in (b) in FIG. 9a, the electronic device is still in the screen-off state. When the order progress corresponding to the take-out application A is updated from "The rider is picking up the order" to "The rider is delivering the order", the application server may send an order progress push message (for example, "The rider is delivering the order") corresponding to the latest order progress of the take-out application A (that is, "The rider is delivering the order") to the electronic device via the push server. The modem in the electronic device may receive the order progress push message, and send the order progress push message to the second processor in the electronic device. The second processor may parse the order progress push message, and send the processed order progress push message to the AOD module in the electronic device. The AOD module may control the display of the electronic device to display the order progress push message in a screen-off manner. In this case, the screen-off push interface shown in (b) in FIG. 9a displayed on the display of the electronic device may be updated to a screen-off push interface shown in FIG. 9b. The interface includes the latest order progress push message displayed in a screen-off display manner, that is, the message "The rider is delivering the order".

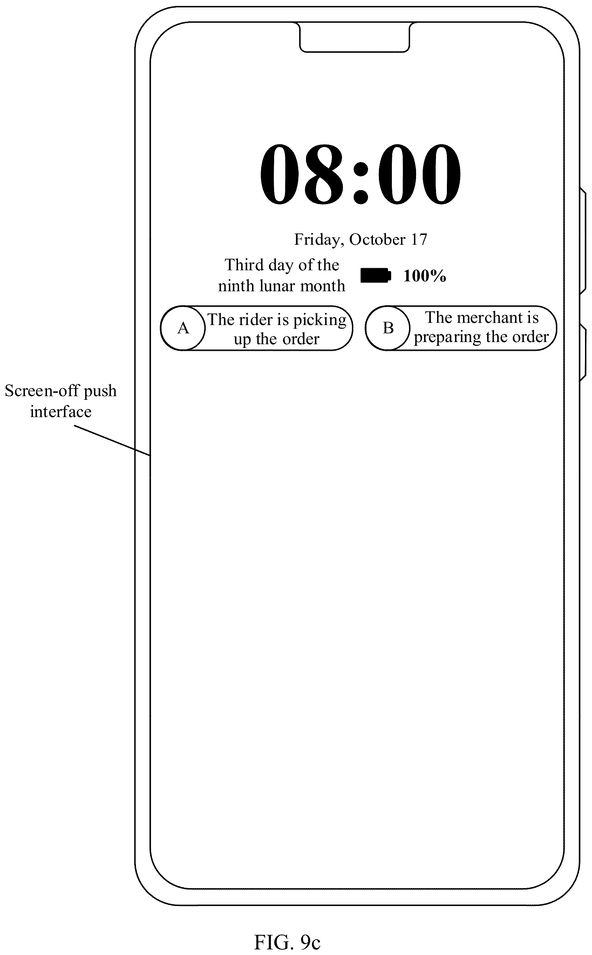

Example 3: Based on Example 1, after the electronic device displays the interface shown in (b) in FIG. 9a, the electronic device is still in the screen-off state. When receiving an order push message (for example, "The merchant is preparing the order") corresponding to another take-out application B installed on the electronic device, the modem in the electronic device may send the push message to the second processor in the electronic device. The second processor may parse the order progress push message, and send the processed order progress push message to the AOD module in the electronic device. The AOD module may control the display of the electronic device to display the order progress push message in a screen-off manner. In this case, the display of the electronic device may switch from displaying the interface shown in (b) in FIG. 9a to displaying a screen-off push interface shown in FIG. 9c. The interface includes the order progress push message (namely, the message "The rider is picking up the order") corresponding to the take-out application A and the order progress push message (namely, the message "The merchant is preparing the order") corresponding to the take-out application B that are simultaneously displayed in a screen-off display manner.

Based on the foregoing method, when the electronic device receives the push message in the screen-off state, the push message may be parsed via the second processor with low power consumption, and then displayed via the AOD module, to implement effect of screen-off display of the received push message. On one hand, it can be ensured that the push message is pushed to a user. On the other hand, an operating system (or the first processor) does not need to participate in processing in the foregoing process, so that a large power consumption loss caused by waking up the operating system (or the first processor) to participate in processing can be avoided. This can reduce an overall power consumption loss and improve processing efficiency.

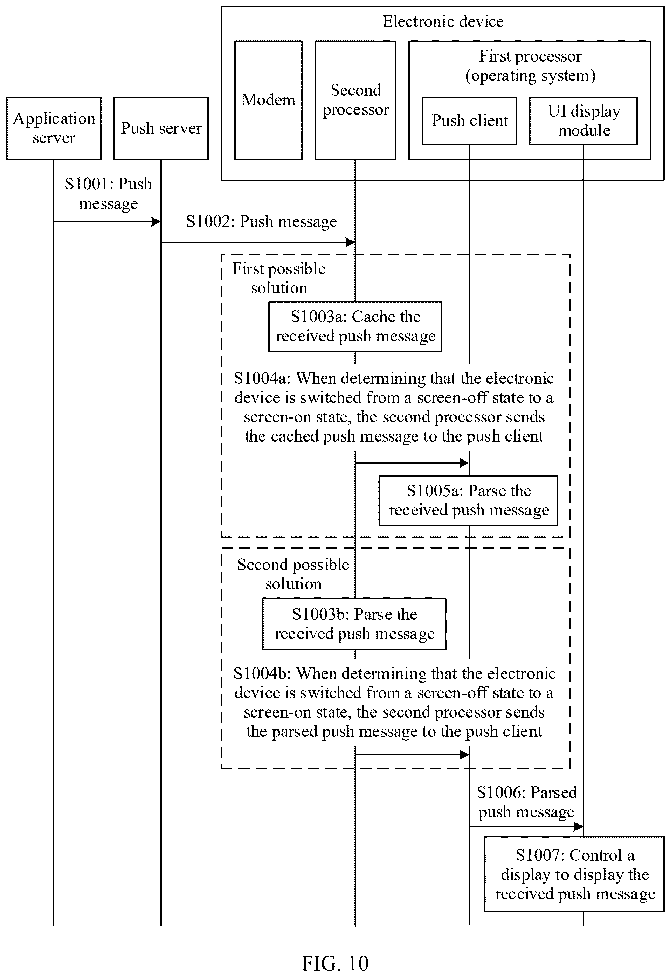

Based on the foregoing descriptions, an example in which a communication module (or a communication component) of an electronic device is a modem is used. For another display method provided in an embodiment of this application, refer to FIG. 10. The display method may be applied to the electronic device shown in FIG. 4 or FIG. 5. For a display method when the communication module is another component or module, refer to the method shown in FIG. 10. Details are not described herein again.

In some embodiments of this application, the display method may be performed after the connection method provided in the foregoing embodiment.

As shown in FIG. 10, the display method may include the following steps.

S1001: An application server sends a push message to a push server.

S1002: The push server sends the push message to a second processor in the electronic device.

For a specific implementation process of step S1002, refer to the method described in step S802 and steps S803a and S804a in the foregoing embodiment, or refer to the method described in step S802 and steps S803b and S804b in the foregoing embodiment. Details are not described herein again.

In a first possible solution, the following steps S1003a to S1005a may be performed after step S1002.

S1003a: The second processor caches the received push message.

When the electronic device is in a screen-off state, an operating system is in a sleep state.

S1004a: When determining that the electronic device is switched from the screen-off state to a screen-on state, the second processor sends the cached push message to a push client in the electronic device.

The second processor may determine a status of the electronic device with reference to the manner in which the modem determines the status of the electronic device in step S803a, and further determine whether the electronic device switches from the screen-off state to the screen-on state. Details are not described herein again.

S 1005a: The push client parses the received push message.

After step S1005a, step S 1006 described below may be performed.

For example, the parsing processing may include processing such as decryption and content analysis, and may further include other processing required for converting the received push message into a format that can be displayed on a display. This is not specifically limited in embodiments of this application.

In a second possible solution, the following steps S1003b and S1004b may be performed after step S1002.

S 1003b: The second processor parses the received push message.

S1004b: When determining that the electronic device is switched from a screen-off state to a screen-on state, the second processor sends the parsed push message to a push client in the electronic device.

After step S 1004b, step S1006 described below may be performed.

S1006: The push client sends the parsed push message to a UI display module.

S1007: The UI display module controls the display to display the received push message.

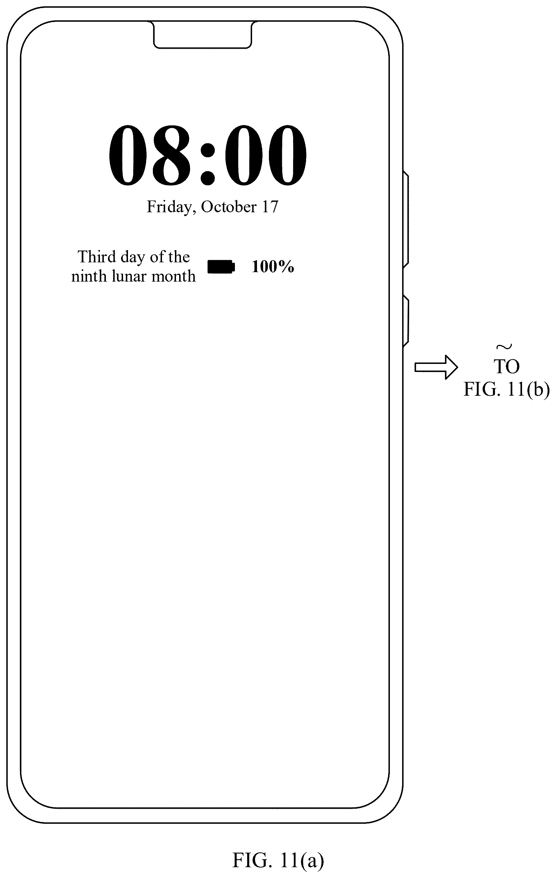

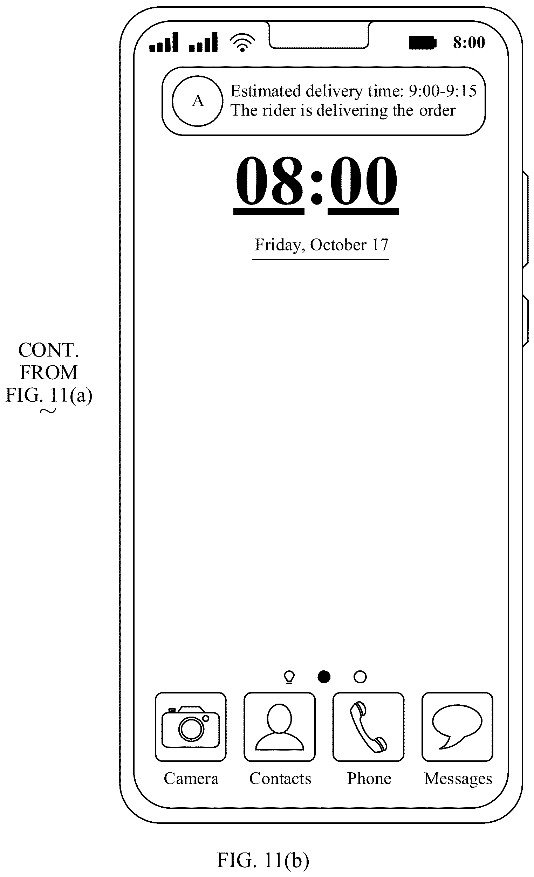

Example 4: In an example, the electronic device is a mobile phone, and an application installed on the electronic device is a take-out application A. The push message may be an order progress push message of the take-out application A. When order progress corresponding to the take-out application A is updated, the application server may send, to the electronic device via the push server, an order progress push message corresponding to latest order progress. The modem in the electronic device may receive the order progress push message. As shown in FIG. 11(a), when the electronic device is in the screen-off state, the display of the electronic device may display a lock screen. When the modem in the electronic device in the screen-off state receives the order progress push message (for example, "The rider is picking up the order") corresponding to the take-out application A, the modem may send the order progress push message to the second processor in the electronic device. The second processor may cache the order progress push message. When the electronic device receives an operation of triggering the electronic device to turn on the screen, for example, receives an operation of unlocking the mobile phone by a user, the electronic device may switch from the screen-off state to the screen-on state, and the operating system (or a first processor) of the electronic device switches from the sleep state to an operating state. The second processor in the electronic device may send the cached order progress push message to the push client in the operating system. For example, the push client may be a system service of the electronic device, the take-out application A, or a push service in the take-out application A. The push client may parse the order progress push message, and send the processed order progress push message to the UI display module in the electronic device. The UI display module may control the display of the electronic device to display the order progress push message. Based on the foregoing method, in response to the received operation of unlocking the mobile phone by the user, the electronic device may switch from displaying the lock screen interface shown in FIG. 11(a) to displaying a desktop interface shown in FIG. 11(b). The interface includes the order progress push message, namely, the message "The rider is picking up the order".

Based on the foregoing method, when receiving the push message in the screen-off state, the electronic device may first cache the push message via the second processor with low power consumption. After the electronic device switches from the screen-off state to the screen-on state, that is, the operating system of the electronic device switches from the sleep state to the operating state, and the operating system processes and displays the cached push message. According to the method, a large power consumption loss caused by waking up the operating system (or the first processor) in the screen-off state to participate in push message processing and display can be avoided, and an overall power consumption loss can be reduced.

In still another display method provided in embodiments of this application, with reference to the display method in FIG. 8 or FIG. 10, subsequent processing performed after the electronic device receives the push message via the second processor and the electronic device determines that the electronic device is in the screen-off state may include the following steps A1 to A5.

A1: The second processor determines whether a current scenario meets a specified condition; and if yes, performs step A2; otherwise, performs step S805, step S1003a, or step S1003b.

In some embodiments of this application, the specified condition may be a condition that is preconfigured by the electronic device or preset by the user and that is met in a scenario in which the push message needs to be displayed in a screen-on manner. This is not specifically limited in embodiments of this application. For example, the specified condition may include at least one of the following: a type of the push message is a specified type, the push message belongs to a specified important message, a push client corresponding to the push message belongs to a specified push client, a push client type of a push client corresponding to the push message belongs to a specified push client type, and current time is within a specified time period.

Optionally, when determining that the current scenario does not meet the specified condition, the electronic device may choose to perform step S805, step S1003a, or step S1003b based on whether the electronic device supports screen-off display of the push message or whether the electronic device supports screen-off display of the push message of the push client.

A2: The second processor sends the push message to the push client.

A3: The push client parses the received push message.

A4: The push client sends the processed push message to the UI display module.

Optionally, the foregoing steps A2 to A4 may be replaced with the following steps: The second processor parses the received push message; the second processor sends the processed push message to the push client; and the push client sends the processed push message to the UI display module.

A5: The UI display module controls the display to display the received push message.

The UI display module may control the electronic device to switch from the screen-off state to the screen-on state, and then display the push message on the display in a screen-on manner.

Based on the foregoing method, in a specific scenario, the electronic device may wake up the operating system to process and display the push message, so that effect of on-demand screen-on display of the push message can be implemented, and flexibility is high.

In some embodiments of this application, with reference to the display method in FIG. 8 or FIG. 10, subsequent processing performed after the electronic device receives the push message via the modem and the electronic device determines that the electronic device is in the screen-on state may include the following steps B1 to B4.

B1: The modem sends the push message to the push client.

When the electronic device is in the screen-on state, the operating system is in the operating state.

B2: The push client parses the received push message.

B3: The push client sends the processed push message to the UI display module.

B4: The UI display module controls the display to display the received push message.

Based on the foregoing method, the electronic device may process and display the push message in the screen-on state via the operating system in the operating state.

It should be understood that the implementation procedures provided in the foregoing embodiments are merely examples of the method procedures applicable to embodiments of this application. An execution sequence of the steps may be correspondingly adjusted based on an actual requirement, and another step may be added, or some steps may be removed.

In some embodiments of this application, the user may control whether screen-on display of the push message by the electronic device is allowed. The electronic device may determine, based on a user operation, whether to support screen-on display of the push message. After the user switches, by performing a corresponding operation (for example, an operation of adjusting the electronic device to a mode in which a screen is turned on when a notification is received), the electronic device to a mode in which screen-on display of the push message is allowed, the electronic device determines that screen-on display of the push message is supported. In this case, the electronic device may process and display the push message according to the method corresponding to steps B1 to B4. After the user switches, by performing a corresponding operation (for example, an operation of adjusting the electronic device to a mode in which a notification is received without turning on a screen), the electronic device to a mode in which screen-on display of the push message is not allowed, the electronic device determines that screen-on display of the push message is not supported. In this case, the electronic device may process and display the push message according to the method in FIG. 8 or FIG. 10.

In some other embodiments of this application, for different applications, the user may separately control whether screen-on display of a push message of each application by the electronic device is allowed. The electronic device may determine, based on a user operation, whether to support screen-on display of the push message of the application. For example, for an application, after the user switches, by performing a corresponding operation, the electronic device to the mode in which screen-on display of the push message of the application is allowed, the electronic device determines that screen-on display of the push message of the application is supported. In this case, the electronic device may process and display the push message of the application according to the method corresponding to steps B1 to B4. After the user switches, by performing a corresponding operation, the electronic device to the mode in which screen-on display of the push message of the application is not allowed, the electronic device determines that screen-on display of the push message of the application is not supported. In this case, the electronic device may process and display the push message of the application according to the method in FIG. 8 or FIG. 10.

In some embodiments of this application, the user may control whether screen-off display of the push message by the electronic device is allowed. The electronic device may determine, based on the user operation, whether to support screen-off display of the push message. After the user switches, by performing a corresponding operation, the electronic device to a mode in which screen-off display of the push message is allowed, the electronic device determines that screen-off display of the push message is supported. In this case, the electronic device may process and display the push message according to the method in FIG. 8. After the user switches, by performing a corresponding operation, the electronic device to a mode in which screen-off display of the push message is not allowed, the electronic device determines that screen-off display of the push message is not supported. In this case, the electronic device may process and display the push message according to the method in FIG. 10 or the method corresponding to steps B1 to B4.

In some other embodiments of this application, for different applications, the user may separately control whether screen-off display of a push message of each application by the electronic device is allowed. The electronic device may determine, based on the user operation, whether to support screen-off display of the push message of the application. For example, for an application, after the user switches, by performing a corresponding operation, the electronic device to the mode in which screen-off display of the push message of the application is allowed, the electronic device determines that screen-off display of the push message of the application is supported. In this case, the electronic device may process and display the push message of the application according to the method in FIG. 5. After the user switches, by performing a corresponding operation, the electronic device to the mode in which screen-off display of the push message of the application is not allowed, the electronic device determines that screen-off display of the push message of the application is not supported. In this case, the electronic device may process and display the push message of the application according to the method in FIG. 7A and FIG. 7B or the method corresponding to steps B1 to B4.

Based on the foregoing embodiments and a same technical concept, an embodiment of this application further provides a display method. The display method may be applied to an electronic device. The electronic device may include a first processor, a second processor, an always on display AOD module, and a display. The first processor is a main processor, the first processor is configured to run an operating system, and the operating system includes a push client and a user interface UI display module. The second processor is configured to serve as a coprocessor or a microprocessor. For components, systems, modules, and the like included in the electronic device, refer to the descriptions in the foregoing embodiments. Details are not described below again.

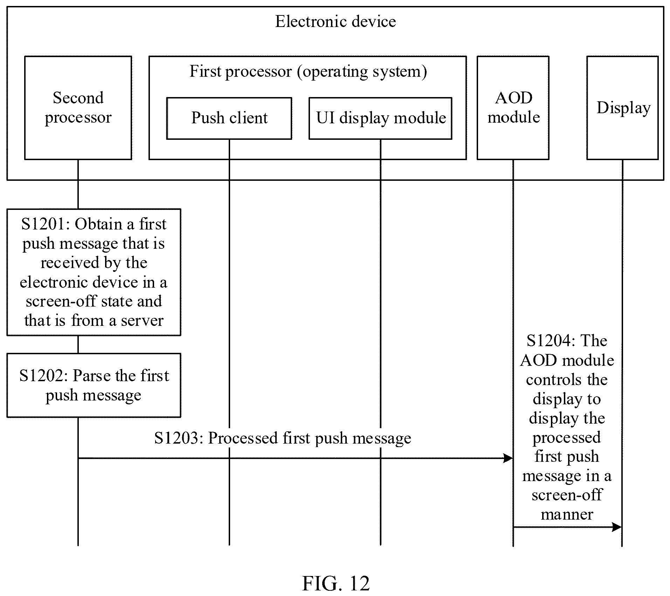

As shown in FIG. 12, the display method may include the following steps.

S1201: The second processor obtains a first push message that is received by the electronic device in a screen-off state and that is from a server.

S1202: The second processor parses the first push message.

S1203: The second processor sends the processed first push message to the AOD module.

S1204: The AOD module controls the display to display the processed first push message in a screen-off manner.

Based on the foregoing embodiments and a same technical concept, an embodiment of this application further provides a display method. The display method may be applied to an electronic device. The electronic device may include a first processor, a second processor, an always on display AOD module, and a display. The first processor is a main processor, the first processor is configured to run an operating system, and the operating system includes a push client and a user interface UI display module. The second processor is configured to serve as a coprocessor or a microprocessor. For components, systems, modules, and the like included in the electronic device, refer to the descriptions in the foregoing embodiments. Details are not described below again.

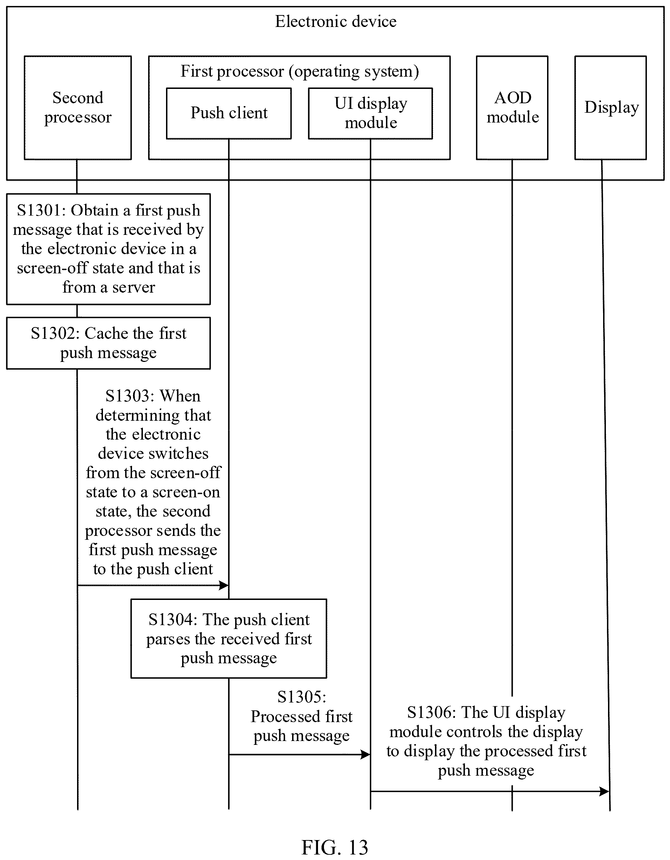

As shown in FIG. 13, the display method may include the following steps.

S1301: The second processor obtains a first push message that is received by the electronic device in a screen-off state and that is from a server.

S1302: The second processor caches the first push message.

S1303: When determining that the electronic device switches from the screen-off state to a screen-on state, the second processor sends the first push message to the push client.

S1304: The push client parses the received first push message.

S1305: The push client sends the processed first push message to the UI display module.

S1306: The UI display module controls the display to display the processed first push message.

In some embodiments of this application, the electronic device in the method in FIG. 12 or FIG. 13 may be the electronic device provided in the foregoing embodiments, and the server in the method in FIG. 12 or FIG. 13 may be the push server provided in the foregoing embodiments.

In some embodiments of this application, in the method in FIG. 12 or FIG. 13, before the second processor obtains the first push message that is received by the electronic device in the screen-off state and that is from the server, the electronic device may send a connection request to the server via the push client, and receive a connection response from the server via the push client. The connection request is used to request to establish a connection to the server, and the connection response is used to determine to establish the connection. In this manner, the electronic device may determine, by interacting with the server, that the electronic device can establish the connection to the server. After receiving the connection response from the server via the push client, the electronic device may establish a connection to the server via a modem of the electronic device, or may establish a connection to the server via the second processor. Specifically, after receiving the connection response from the server, the push client in the electronic device may determine, according to the method provided in the foregoing embodiment, a manner used to establish the connection to the server. If the push client determines to establish the connection to the server via the modem of the electronic device, the push client may indicate the modem of the electronic device to establish the connection to the server. For example, the electronic device may include the first control module in the foregoing embodiment, and the push client may indicate, via the first control module in the electronic device, the modem to establish a connection to the server. If the push client determines to establish the connection to the server via the second processor, the push client may indicate the second processor to establish a connection to the server. For example, the electronic device may include the second control module in the foregoing embodiment, and the push client may indicate, via the second control module in the electronic device, the second processor to establish the connection to the server.

After establishing the connection to the server via the modem of the electronic device, the electronic device may send a heartbeat packet to the server based on a heartbeat period via the modem of the electronic device, and receive a heartbeat reply packet corresponding to the heartbeat packet sent by the server, to maintain the connection to the server. After establishing the connection to the server via the second processor, the electronic device may establish the connection to the server via the second processor. The second processor sends a heartbeat packet to the server based on a heartbeat period, and receives a heartbeat reply packet corresponding to the heartbeat packet sent by the server, to maintain the connection to the server. When sending the heartbeat packet to the server based on the heartbeat period via the second processor, the electronic device may specifically send the heartbeat packet to a communication module of the electronic device based on the heartbeat period via the second processor, and forward the heartbeat packet to the server via the communication module of the electronic device.

In some embodiments of this application, the electronic device may further include a communication module. For the communication module, refer to the descriptions in the foregoing embodiments. Details are not described herein again. For example, the communication module may be a modem of the electronic device or a wireless fidelity Wi-Fi communication component (the Wi-Fi communication component may be used as the Wi-Fi communication module in the foregoing embodiments). Based on the method in FIG. 12 or FIG. 13, in an optional implementation, before the second processor obtains the first push message that is received by the electronic device in the screen-off state and that is from the server, the electronic device may receive the first push message from the server via the communication module, and may further determine, via the communication module, that the electronic device is in the screen-off state. In this manner, a manner in which the second processor obtains the first push message that is received by the electronic device in the screen-off state and that is from the server may be receiving the first push message sent by the communication module. In another optional implementation, before the second processor obtains the first push message that is received by the electronic device in the screen-off state and that is from the server, the electronic device may receive the first push message from the server via the communication module. In this manner, the electronic device may determine, via the second processor, that the electronic device is in the screen-off state. A manner in which the second processor obtains the first push message that is received by the electronic device in the screen-off state and that is from the server may be receiving the first push message sent by the communication module.

In some embodiments of this application, the first push message in the method in FIG. 12 or FIG. 13 may include a plurality of push messages, and a priority of each of the plurality of push messages is lower than or equal to a specified priority. Optionally, a quantity of the plurality of push messages is a specified value.

In some embodiments of this application, the first push message in the method in FIG. 12 or FIG. 13 may be a push message whose priority is higher than the specified priority.

In some embodiments of this application, in the method in FIG. 12 or FIG. 13, before the second processor parses the first push message, or before the second processor caches the first push message, the second processor may further determine that the electronic device is in a mode in which a notification is received without turning on a screen. In this way, the electronic device processes the push message in the mode in which a notification is received without turning on a screen by using the method in FIG. 12 or FIG. 13. The mode in which a notification is received without turning on a screen is a mode in which screen-on display of the push message is not allowed after the push message is received in the screen-off state.

Based on the foregoing embodiments and a same technical concept, an embodiment of this application further provides a display method. The display method may be applied to the electronic device in the foregoing embodiments, for example, may be applied to the electronic device in the method in FIG. 12 or FIG. 13. The display method may include: The second processor in the electronic device obtains a second push message that is received by the electronic device in the screen-off state and that is from the server, and determines that a current scenario meets a specified condition. When the second processor determines that the current scenario meets the specified condition, in an optional implementation, the second processor may send the second push message to the push client. The push client may parse the second push message, and send the processed second push message to the UI display module. The UI display module may control the display to display the processed second push message. In another optional implementation, the second processor may parse the second push message, and send the processed second push message to the push client. The push client sends the processed second push message to the UI display module. The UI display module controls the display to display the processed second push message.

Optionally, when the display method is applied to the electronic device in the method in FIG. 12 or FIG. 13, the display method may be performed after the AOD module controls the display to display the processed first push message, or the display method may be performed after the UI display module controls the display to display the processed first push message.

In the foregoing method, for specific steps performed by a component, a system, or a module in the electronic device, refer to related descriptions in the foregoing embodiments. Details are not described herein again.

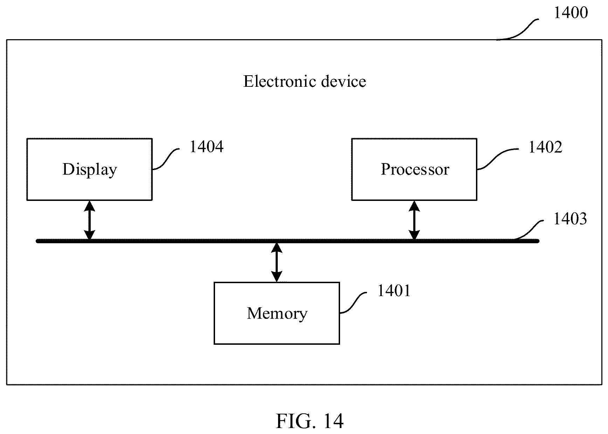

Based on the foregoing embodiments and a same technical concept, an embodiment of this application further provides an electronic device. The electronic device is configured to implement the method provided in embodiments of this application. As shown in FIG. 14, the electronic device 1400 may include a memory 1401, one or more processors 1402, and one or more computer programs (not shown in the figure). The foregoing components may be coupled through one or more communication buses 1403. The electronic device 1400 may further include a display 1404.

The memory 1401 stores one or more computer programs (code), and the one or more computer programs include computer instructions. The one or more processors 1402 invoke the computer instructions stored in the memory 1401, so that the electronic device 1400 performs the method provided in the foregoing embodiments of this application.

During specific implementation, the memory 1401 may include a high-speed random access memory, and may also include a nonvolatile memory like one or more magnetic disk storage devices, a flash device, or another nonvolatile solid-state storage device. The memory 1401 may store an operating system (which is briefly referred to as a system below), for example, an embedded operating system like Android, iOS, Windows, or Linux. The memory 1401 may be configured to store an implementation program of embodiments of this application. The memory 1401 may further store a network communication program. The network communication program may be used for communication with one or more additional devices, one or more user equipments, or one or more network devices.

The one or more processors 1402 may be a general-purpose central processing unit (Central Processing Unit, CPU), a microprocessor, an application-specific integrated circuit (Application-Specific Integrated Circuit, ASIC), or one or more integrated circuits configured to control program execution of the solutions of this application.

The display 1404 is configured to display a related user interface like an application interface.

It should be noted that FIG. 14 is merely an implementation of the electronic device 1400 provided in embodiments of this application. In actual application, the electronic device 1400 may further include more or fewer components. For details, refer to the specific structure and descriptions shown in FIG. 2. This is not limited herein.

Based on the foregoing embodiments and a same technical concept, an embodiment of this application further provides a computer-readable storage medium. The computer-readable storage medium stores a computer program. When the computer program is run on a computer, the computer is enabled to perform the method provided in the foregoing embodiments.

Based on the foregoing embodiments and a same technical concept, an embodiment of this application further provides a computer program product. The computer program product includes a computer program or instructions. When the computer program or the instructions are run on a computer, the computer is enabled to perform the method provided in the foregoing embodiments.

All or some of the methods in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the process or functions according to embodiments of the present invention are all or partially generated. The computer may be a general-purpose computer, a special-purpose computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A display method, applied to an electronic device, wherein the electronic device comprises a first processor, a second processor, an always on display AOD module, and a display, the first processor is a main processor, the first processor is configured to run an operating system, the operating system comprises a push client and a user interface UI display module, and the second processor is configured to serve as a coprocessor or a microprocessor; and the method comprises:
obtaining, by the second processor, a first push message that is received by the electronic device in a screen-off state and that is from a server;
parsing, by the second processor, the first push message, and sending the processed first push message to the AOD module; and controlling, by the AOD module, the display to display the processed first push message in a screen-off manner; or
caching, by the second processor, the first push message, and sending the first push message to the push client when determining that the electronic device is switched from the screen-off state to a screen-on state; parsing, by the push client, the received first push message, and sending the processed first push message to the UI display module; and controlling, by the UI display module, the display to display the processed first push message.

2. The method according to claim 1, wherein before obtaining, by the second processor, the first push message that is received by the electronic device in the screen-off state and that is from the server, the method further comprises:
sending a connection request to the server via the push client, wherein the connection request is used to request to establish a connection to the server;
receiving a connection response from the server via the push client, wherein the connection response is used to determine to establish the connection; and
establishing the connection to the server via a modem of the electronic device; and sending a heartbeat packet to the server based on a heartbeat period via the modem of the electronic device, and receiving a heartbeat reply packet corresponding to the heartbeat packet sent by the server; or
establishing the connection to the server via the second processor; and sending a heartbeat packet to the server based on a heartbeat period via the second processor, and receiving a heartbeat reply packet corresponding to the heartbeat packet sent by the server.

3. The method according to claim 2, wherein sending the heartbeat packet to the server based on the heartbeat period via the second processor comprises:
sending the heartbeat packet to a communication module of the electronic device based on the heartbeat period via the second processor; and
forwarding the heartbeat packet to the server via the communication module of the electronic device.

4. The method according to claim 2 or 3, wherein after receiving the connection response from the server via the push client, and before establishing the connection to the server via the modem of the electronic device, the method further comprises:
determining to establish the connection to the server via the modem of the electronic device.

5. The method according to any one of claims 2 to 4, wherein after receiving the connection response from the server via the push client, and before establishing the connection to the server via the second processor, the method further comprises:
determining to establish the connection to the server via the second processor.

6. The method according to any one of claims 1 to 5, wherein before parsing, by the second processor, the first push message, or before caching, by the second processor, the first push message, the method further comprises:
determining, by the second processor, that the electronic device is in a mode in which a notification is received without turning on a screen, wherein the mode in which a notification is received without turning on a screen is a mode in which screen-on display of the push message is not allowed after the push message is received in the screen-off state.

7. The method according to any one of claims 1 to 6, wherein after controlling, by the AOD module, the display to display the processed first push message in the screen-off manner, or after controlling, by the UI display module, the display to display the processed first push message, the method further comprises:
obtaining, by the second processor, a second push message that is received by the electronic device in the screen-off state and that is from the server;
determining, by the second processor, that a current scenario meets a specified condition;
sending, by the second processor, the second push message to the push client, and parsing, by the push client, the second push message, and sending the processed second push message to the UI display module; or parsing, by the second processor, the second push message, and sending the processed second push message to the push client, and sending, by the push client, the processed second push message to the UI display module; and
controlling, by the UI display module, the display to display the processed second push message.

8. The method according to claim 1 or 2, wherein the electronic device further comprises a communication module, and before obtaining, by the second processor, the first push message that is received by the electronic device in the screen-off state and that is from the server, the method further comprises:
receiving, by the communication module, the first push message from the server, and determining that the electronic device is in the screen-off state; and
obtaining, by the second processor, the first push message that is received by the electronic device in the screen-off state and that is from the server comprises:
receiving, by the second processor, the first push message sent by the communication module.

9. The method according to claim 8, wherein the communication module is a modem or a wireless fidelity Wi-Fi communication component of the electronic device.

10. The method according to claim 1 or 2, wherein before obtaining, by the second processor, the first push message that is received by the electronic device in the screen-off state and that is from the server, the method further comprises:
determining, by the second processor, that the electronic device is in the screen-off state.

11. The method according to any one of claims 1 to 10, wherein the first push message comprises a plurality of push messages, and a priority of each of the plurality of push messages is lower than or equal to a specified priority.

12. The method according to claim 11, wherein a quantity of the plurality of push messages is a specified value.

13. The method according to any one of claims 1 to 12, wherein the first processor is a large-core processor, and the second processor is a small-core processor.

14. The method according to any one of claims 1 to 13, wherein the second processor is an intelligent sensor hub or a microcontroller unit.

15. An electronic device, wherein the electronic device comprises a memory and one or more processors, wherein
the memory is configured to store computer program code, and the computer program code comprises computer instructions; and when the computer instructions are executed by the one or more processors, the electronic device is enabled to perform the method according to any one of claims 1 to 14.

16. A computer-readable storage medium, wherein the computer-readable storage medium stores a computer program, and when the computer program is run on an electronic device, the electronic device is enabled to perform the method according to any one of claims 1 to 14.

17. A computer program product, wherein the computer program product comprises a computer program or instructions, and when the computer program or the instructions are run on an electronic device, the electronic device is enabled to perform the method according to any one of claims 1 to 14.
